# FASCICULE DE BREVET EUROPEEN

(11) **EP 2 029 972 B1**
(45) Date de publication et mention de la délivrance du brevet: **04.12.2013**
(21) Numéro de dépôt: 07766009.0
(22) Date de dépôt: 09.05.2007
(51) Int. Cl.: G01D 7/00

(54) **DISPOSITIF INDICATEUR D'UNE GRANDEUR PHYSIQUE**
VORRICHTUNG ZUR ANZEIGE EINER PHYSIKALISCHEN GRÖSSE
DEVICE FOR INDICATING A PHYSICAL QUANTITY

(30) Priorité: 31.05.2006 FR 0651971
(43) Date de publication de la demande: 04.03.2009
(73) Titulaire: Air Liquide Medical Systems, 92160 Antony (FR); L'AIR LIQUIDE, SOCIETE ANONYME POUR L'ETUDE ET L'EXPLOITATION DES PROCEDES GEORGES CLAUDE, 75007 Paris (FR)
(72) Inventeur: PIN, Fabrice, F-78220 Viroflay (FR); BLEYS, Christian, F-77000 Livry sur Seine (FR); DECK, Philippe, F-93100 Montreuil (FR)
(74) Mandataire: De Cuenca, Emmanuel Jaime
(86) Numéro de dépôt international: PCT/FR2007/051229
(87) Numéro de publication internationale: WO 2007/138207

(56) Documents cités:
- EP-A1- 0 982 121
- EP-A2- 0 486 922
- US-A1- 4 420 748
- US-A1- 4 734 688

## Description

La présente invention concerne un dispositif indicateur d'une grandeur physique.

L'invention trouve une application avantageuse dans le domaine général de la mesure de la pression de fluides, et plus spécialement de fluides industriels ou médicaux contenus dans des bouteilles.

Les dispositifs indicateurs d'une grandeur physique quelconque sont le plus souvent constitués d'un boîtier comprenant, d'une part, un capteur de mesure de ladite grandeur physique, et, d'autre part, un afficheur d'une valeur de la grandeur physique mesurée par le capteur de mesure.

Les afficheurs parmi les plus utilisés comprennent un écran d'affichage de caractères alpha-numériques ou graphiques commandé par une carte électronique qui convertit l'information analogique fournie par le capteur de mesure en une information numérique apte à être affichée sur l'écran. Les écrans à cristaux liquides sont un exemple très répandu de ce type d'afficheurs.

Cependant, en cas de choc, il peut se produire que le verre de l'écran d'affichage se casse et rompe tout ou partie des connexions alimentant les segments dont est constitué chaque caractère de l'afficheur. L'affichage disparaît soit totalement, soit partiellement en affichant alors des signes incompréhensibles ou même une valeur de mesure fausse. Dans le cas de dispositifs indicateurs de pression de bouteilles de fluides, ce manque d'information, ou pire une information fausse, peut mettre en cause gravement la sécurité.

Par exemple, si l'affichage correct est « 200 bar » et que les caractères « 20 » disparaissent, seul le « 0 » restant affiché, l'utilisateur peut croire à l'absence de pression alors qu'une pression de 200 bar existe effectivement et constitue un danger potentiel. Dans d'autres applications, c'est au contraire l'absence de gaz, alors que l'afficheur indique une pression non nulle, qui est dangereuse.

Aussi, un but recherché par l'invention est de proposer un dispositif indicateur d'une grandeur physique qui permettrait de fournir à l'utilisateur la garantie que l'indication affichée par le dispositif est fiable.

Ce but est atteint, conformément à l'invention, grâce à un dispositif indicateur d'une grandeur physique, comprenant un boîtier auquel est raccordé un capteur de mesure de ladite grandeur physique et dans lequel est disposé un afficheur d'une valeur de la grandeur physique mesurée par ledit capteur de mesure, remarquable en ce que, ledit afficheur comprenant un écran d'affichage de caractères alpha-numériques ou graphiques commandé par une carte électronique, une ligne de connexion électrique à ladite carte électronique est disposée sur ledit écran, ladite connexion électrique étant apte à se rompre en cas de rupture de l'écran d'affichage.

De manière pratique, la ligne de connexion est intégrée à l'afficheur, au même titre que les segments d'affichage. Elle peut cependant également être rapportée sur ou derrière l'écran.

Comme on le verra en détail plus loin, la rupture de la connexion électrique suite à la rupture de l'écran est détectée par la carte électronique qui met alors l'afficheur hors service et/ou prévient l'utilisateur par d'autres moyens. On est alors certain que l'afficheur ne fournit de valeurs de la grandeur que lorsque la ligne de connexion est intègre, les valeurs affichées peuvent donc être considérées comme fiables.

Une caractéristique additionnelle avantageuse ou indépendante du dispositif indicateur conforme à l'invention peut consister en ce qu'il présente, situés successivement dans des plans sensiblement parallèles, au moins, un couvercle transparent dudit boîtier, ledit afficheur, ladite carte électronique et ledit capteur de mesure.

On comprend que, dans cette architecture, le capteur de mesure se trouve protégé par l'empilement des composants qui le séparent du couvercle transparent, ce qui le met à l'abri de chocs, dits frontaux, exercés perpendiculairement aux plans sensiblement parallèles.

Cette protection du capteur de mesure contre les chocs frontaux peut encore être renforcée du fait que, selon l'invention, un élément de maintien et de protection tel qu'une résine remplit un volume intérieur dudit boîtier.

On obtient ainsi non seulement une meilleure protection du capteur de mesure lui-même, mais également celle des composants internes au boîtier. L'injection de résine dans le boîtier présente bien d'autres avantages encore comme cela sera expliqué plus loin.

Un autre problème des solutions connues concerne la fiabilisation du raccordement du capteur de mesure au boîtier du dispositif indicateur.

Les solutions usuelles actuellement utilisées pour raccorder le capteur au boîtier sont le vissage, le collage, le clipsage ou sertissage et l'usage d'un contre-écrou. Cependant, ces solutions connues présentent toutes des limites en terme de fiabilité. En effet, le vissage est sensible aux vibrations et présente une tenue mécanique faible s'il est réalisé avec des matériaux plastiques, le collage a une mauvaise tenue dans le temps et aux solvants, le clipsage ou le sertissage présentent également une tenue mécanique faible et une mauvaise étanchéité, les contre-écrous sont très encombrants et peuvent se dévisser sous l'effet des vibrations.

Une solution proposée (de façon indépendante ou additionnelle) par l'invention pour résoudre ce problème additionnel de fiabilité consiste en ce que ledit boîtier comprend un insert de raccordement auquel est fixé, par exemple par soudage, ledit capteur de mesure.

Dans ce contexte, l'invention peut prévoir alors que ledit boîtier est surmoulé sur ledit insert. On notera d'ailleurs que dans un montage traditionnel avec un boîtier plastique, le surmoulage du boîtier sur le capteur est impossible du fait que le capteur ne peut en général être chauffé au risque de détériorer la zone sensible du capteur.

De préférence, le surmoulage du boîtier est réalisé avant le soudage du capteur sur l'insert.

La présence de l'insert intermédiaire offre une possibilité de protection supplémentaire du capteur si, comme le prévoit l'invention, une zone sensible du capteur de mesure est disposée à l'intérieur dudit insert. On verra plus loin en effet que ladite zone sensible se trouve alors protégée par l'insert contre les chocs latéraux appliqués perpendiculairement à l'insert.

L'invention peut comprendre tout ou partie des caractéristiques ci-dessous :
- le dispositif comprend en outre une alarme sonore et une cavité résonnante associée,
- ladite cavité résonnante comporte une chicane,
- ladite cavité résonnante est fermée par une membrane de protection,
- ledit capteur de mesure et ladite alarme sonore sont épargnés par ladite résine,
- ladite résine est du type uréthane, polyuréthane ou époxy transparente,
- ledit insert comprend une gorge d'immobilisation en translation par rapport au boîtier,
- ledit insert présente un profil apte à immobiliser ledit insert en rotation par rapport au boîtier,
- ledit profil est hexagonal,
- une zone sensible du capteur de mesure est disposée à l'intérieur dudit insert.

La description qui va suivre en regard des dessins annexés, donnés à titre d'exemples non limitatifs fera bien comprendre en quoi consiste l'invention et comment elle peut être réalisée.
La figure 1 est une vue en coupe d'un dispositif indicateur de pression conforme à l'invention.
La figure 2 est une vue en coupe du dispositif de la figure 1 rempli d'une résine.
La figure 3 est une vue en coupe du dispositif de la figure 2 montrant un compartiment d'alarme sonore.
La figure 4 est une vue de détail en coupe de l'insert du dispositif des figures 1 à 3.
La figure 5 est une vue de face d'un afficheur du dispositif indicateur des figures 1 à 4 selon un premier mode de réalisation.
La figure 6 est une vue de face d'un afficheur du dispositif indicateur des figures 1 à 4 selon un second mode de réalisation.
La figure 7 est une vue en coupe et schématique d'un robinet/détendeur comportant un dispositif indicateur de pression selon les figures 1 à 6.

Dans la suite de la description, on se limitera pour des raisons de clarté de la présentation au cas d'un dispositif indicateur de pression, tel que ceux qui équipent les détendeurs et robinets/détendeurs des bouteilles de fluides industriels ou médicaux. Mais il est toutefois bien entendu que l'invention n'est pas limitée à ce type unique d'indicateur et qu'elle s'étend à des indicateurs d'autres grandeurs physiques, notamment la température, souvent associée à la pression dans le domaine des fluides.

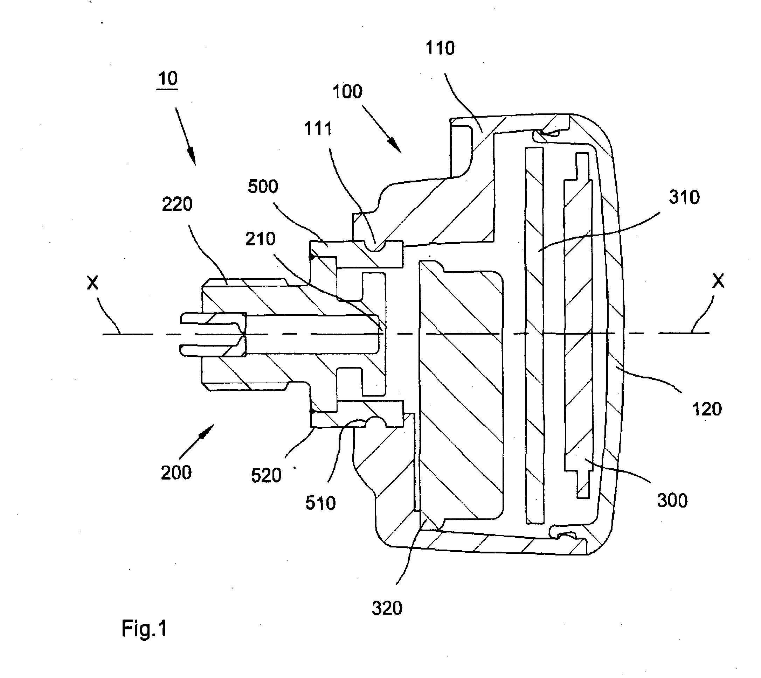

Le dispositif indicateur 10 de pression représenté en coupe sur la figure 1 comprend un boîtier 100 auquel est raccordé un capteur 200 de pression et dans lequel est disposé un afficheur 300 de la valeur de la pression mesurée par le capteur 200.

Dans l'exemple de réalisation de la figure 1, le capteur 200 de pression présente une zone 210 sensible à la pression comportant des composants, tels que des jauges de contrainte, aptes à fournir à une carte électronique 310, située entre l'afficheur 300 et le capteur 200, un signal électrique représentatif de la pression mesurée. Ce signal électrique est traité par ladite carte électronique 310 de manière à permettre l'affichage de la valeur de la pression mesurée et/ou d'une autonomie restante en durée, par exemple sous forme numérique sur un écran à cristaux liquides de l'afficheur 300. La carte électronique 310 est alimentée par une pile 320 placée à l'intérieur du boîtier 100 entre l'afficheur 300 et le capteur 200.

Le capteur 200 de pression comporte un filetage 220 destiné à raccorder l'ensemble du dispositif indicateur 10 de pression à un détendeur ou à un robinet/détendeur. Le capteur 200 se présente sous la forme d'un corps creux de sorte que la zone sensible 210 soit en communication avec l'entrée haute pression, par exemple, du détendeur ou du robinet/détendeur.

Comme l'indique la figure 1, le boîtier 100 est constitué d'un corps 110 sensiblement cylindrique et d'un couvercle 120 sensiblement circulaire et coaxial au corps 110, et fixé au corps 110 du boîtier par exemple par clipsage. Le couvercle 120 est situé en regard de l'afficheur 300. Le corps 110 de boîtier ainsi que le couvercle 120 peuvent être réalisés en matériaux plastiques à la condition que le matériau plastique du couvercle 120 soit transparent afin de rendre visible l'écran de l'afficheur 300 de l'extérieur du boîtier 100.

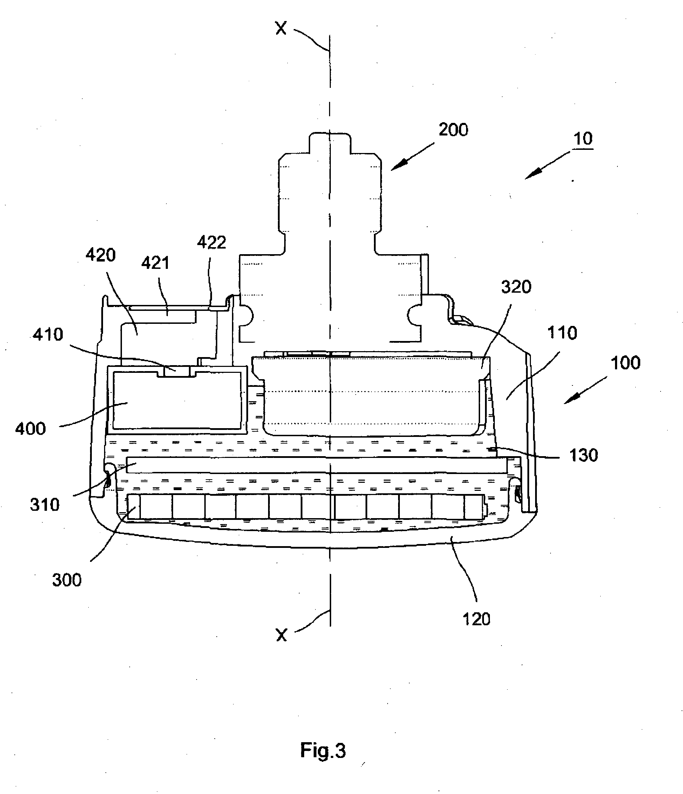

Sur la figure 3, on peut voir que le dispositif indicateur 10 de pression comporte en outre une alarme sonore 400 destinée notamment à avertir les utilisateurs d'une bouteille de fluide incorporant ledit indicateur 10 de pression que la bouteille est vide ou sur le point de se vider. L'orifice 410 de sortie de l'alarme sonore 400 débouche sur une cavité résonnante 420, laquelle présente une chicane 421 prévue pour protéger l'ensemble du dispositif d'alarme contre d'éventuelles atteintes extérieures. Une membrane 422 de protection contre l'humidité, mais transparente aux sons, referme la cavité résonnante 420.

L'architecture retenue pour le dispositif indicateur 10 de pression, telle que représentée à la figure 1 par exemple, fait apparaître un empilement constitué du couvercle 120, de l'afficheur 300, de la carte électronique 310, de la pile 320 et de la zone sensible 210, ces éléments étant situés dans des plans sensiblement parallèles, perpendiculaires à l'axe X-X du corps 110 du boîtier 100. Cette disposition est particulièrement avantageuse du fait que la zone sensible 210 du capteur se trouve protégée de chocs ou d'enfoncements extérieurs qui seraient appliqués au couvercle 120. La pression est ainsi toujours contenue, sans risque d'explosion pour l'utilisateur. D'autre part, même si l'un des constituants de l'ensemble d'affichage est détérioré ou détruit, l'information de pression reste toujours disponible au niveau de la zone sensible 210 et peut être transmise par exemple par voie radio à un récepteur extérieur au dispositif indicateur 10 de pression devenu hors d'usage.

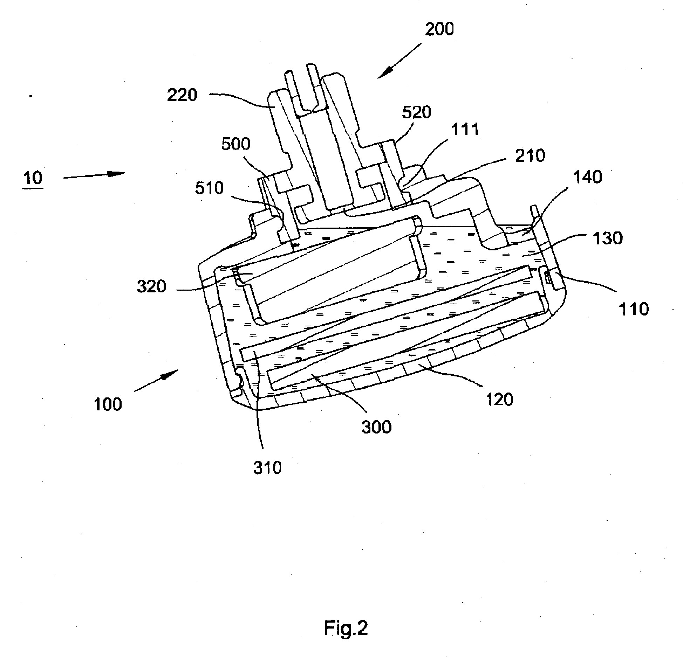

Selon le mode de réalisation des figures 2 et 3, une résine 130 remplit l'intérieur du boîtier 100 de manière à enrober tous les composants internes, à l'exception de la zone sensible 210 et l'alarme sonore 400 qui doivent être épargnées, comme le montrent respectivement les figures 2 et 3.

La résine est injectée dans le boîtier 100 à travers un orifice 140 de remplissage visible sur la figure 2, un rebord 150 étant ménagé sur le corps 110 du boîtier pour retenir la résine qui fera office de bouchon afin d'obturer l'orifice 140 à la fin du remplissage.

La figure 2 montre plus particulièrement que le remplissage de résine s'effectue alors que le boîtier est incliné, ceci afin d'évacuer d'éventuelles bulles qui se formeraient devant l'afficheur 300.

La résine injectée présente de nombreux avantages :
- elle bloque tous les composants internes qui se trouvent donc parfaitement maintenus en position et ne peuvent acquérir aucun jeu,
- elle scelle hermétiquement le corps 110 du boîtier et le couvercle 120 sans avoir recours à un joint,
- elle assure l'étanchéité des composants internes au boîtier 100 en obstruant les seuls points d'entrée possibles qui sont l'orifice 140 d'injection et la zone périphérique de clipsage du couvercle 120 sur le corps 110 de boîtier,
- elle augmente notablement la tenue aux chocs des composants, en particulier le verre de l'écran de l'afficheur 300, fragile par nature.

La résine peut être de type uréthane, polyuréthane ou époxy transparente.

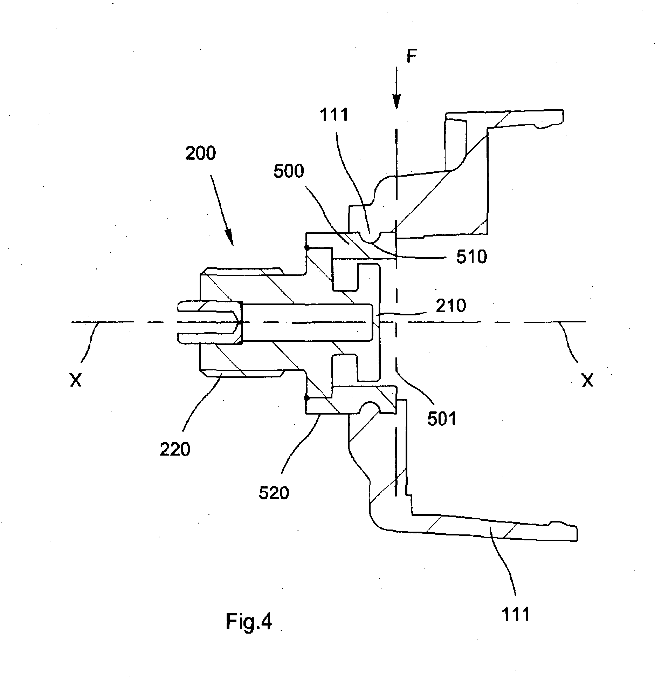

La figure 4 est une vue de détail qui montre que le capteur 200 de pression est raccordé au corps 110 du boîtier 100 au moyen d'un insert 500 auquel le capteur 200 est soudé. L'insert 500 est métallique et le corps 110 du boîtier en matériau plastique est surmoulé sur cet insert.

Une gorge 510 est prévue sur le pourtour de l'insert 500 pour coopérer avec une nervure 111 formée lors du surmoulage sur le corps 110 et assurer l'immobilisation en translation de l'insert.

De même, un profil extérieur 520 est donné à l'insert 500 de manière à empêcher toute rotation de l'insert autour de son axe. Ce profil est, par exemple, hexagonal. Ce profil peut aussi servir pour visser ou dévisser l'ensemble du dispositif indicateur 10 de pression sur un détendeur ou robinet/détendeur au moyen d'une simple clé.

Enfin, la figure 4 montre une configuration d'assemblage particulièrement avantageuse dans laquelle la zone sensible 210 du capteur 200 est disposée à l'intérieur de l'insert 500, c'est-à-dire en retrait du bord 501 de l'insert, et se trouve donc protégée de chocs latéraux perpendiculaires à l'axe X du boîtier 100, représentés par la flèche F.

Ce type de montage avec un insert intermédiaire offre également d'autres avantages :
- assemblage de pièces individuelles très simple,
- excellente tenue mécanique,
- étanchéité parfaite sans pièce dédiée,
- facilité d'adapter le capteur 200 en termes de diamètre et de filetage sans changer l'insert 500.

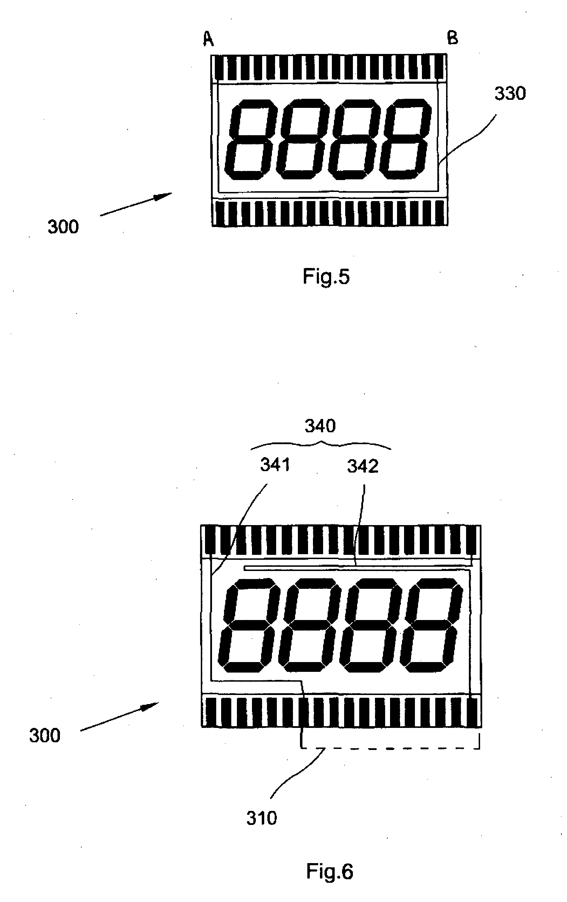

Les figures 5 et 6 montrent un afficheur 300 à cristaux liquides équipé d'une ligne dite d'intégrité, destinée à fournir une information sure quant à la fiabilité des indications de pression affichées, en cas de détérioration du verre de l'écran de l'afficheur.

La ligne d'intégrité de la figure 5 consiste en une ligne 330 de connexion unique à la carte électronique disposée sur l'écran de l'afficheur 300, cette ligne traversant tout l'écran dans toutes ses directions de manière à pouvoir rompre la connexion en cas de rupture de l'écran lui-même.

La ligne 330 constitue un interrupteur entre les contacts A et B dont l'état est surveillé en permanence par la carte électronique. Si l'interrupteur équivalent est fermé, la ligne 330 n'est pas interrompue et l'écran est considéré comme intact, ses indications sont donc considérées comme fiables. Par contre, en cas de rupture du verre de l'écran entraînant une rupture de la ligne 330, l'état ouvert de l'interrupteur équivalent est détecté par la carte électronique et l'afficheur 300 est mis hors service.

Cependant, une valeur fiable de la pression peut toujours être fournie par un canal radio par exemple, car la mise hors service de l'afficheur n'a pas d'influence en général sur le fonctionnement du capteur 200 de pression lui-même.

Le câblage de l'écran étant souvent complexe, il peut être nécessaire d'interrompre la ligne de connexion pour laisser d'autres connexions alimentant les segments de l'afficheur. Dans ce cas, la ligne 340 d'intégrité est constituée de lignes élémentaires 341, 342 reliées par la carte électronique.

Plusieurs lignes de ce type peuvent également être envisagées simultanément.

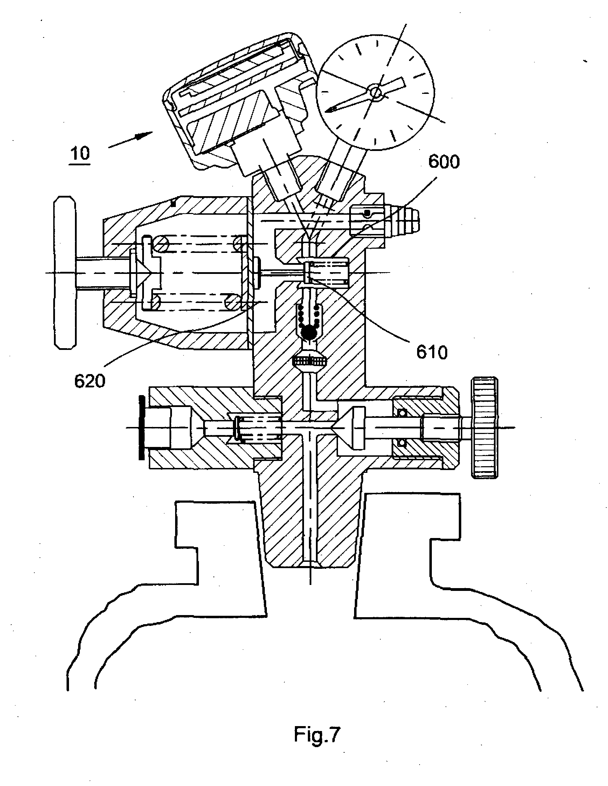

La figure 7 illustre une application de l'invention à un robinet/détendeur dans laquelle le dispositif indicateur 10 de pression débouche dans une portion 600 de circuit haute pression en amont d'un clapet 610 de détente et de la portion basse pression 620 du robinet/détendeur.

## Revendications

1. Dispositif indicateur (10) d'une grandeur physique, comprenant un boîtier (100) auquel est raccordé un capteur (200) de mesure de ladite grandeur physique et dans lequel est disposé un afficheur (300) d'une valeur représentative de la grandeur physique mesurée par ledit capteur de mesure, **caractérisé en ce que**, ledit afficheur comprenant un écran d'affichage de caractères alpha-numériques ou graphiques commandé par une carte électronique (310), une ligne (330 ; 340) de connexion électrique à ladite carte électronique est disposée sur ledit écran, ladite connexion électrique étant apte à se rompre en cas de rupture de l'écran d'affichage.

2. Dispositif selon la revendication 1, **caractérisé en ce que** ladite ligne (330) de connexion électrique est une ligne conductrice unique connectée à ladite carte électronique.

3. Dispositif selon la revendication 1, **caractérisé en ce que** ladite ligne (340) de connexion électrique est une ligne conductrice constituée d'une pluralité de lignes élémentaires (341, 342) reliées entre elles par ladite carte électronique.

4. Dispositif selon l'une quelconque des revendications 1 à 3, **caractérisé en ce qu'**il présente,' situés successivement dans des plans sensiblement parallèles, au moins, un couvercle transparent (120) dudit boîtier (100), ledit afficheur (300), ladite carte électronique (310) et ledit capteur (200) de mesure.

5. Dispositif selon la revendication 4, **caractérisé en ce qu'**il comprend également un élément (320) d'alimentation pour ladite carte électronique.

6. Dispositif selon l'une quelconque des revendications 1 à 5, **caractérisé en ce qu'**un élément de maintien et de protection tel qu'une résine (130) remplit un volume intérieur dudit boîtier (100).

7. Dispositif selon l'une quelconque des revendications 1 à 6, **caractérisé en ce que** ledit boîtier (100) comprend un insert .(500) de raccordement auquel est fixé, par exemple par soudage, ledit capteur (200) de mesure.

8. Dispositif selon la revendication 7, **caractérisé en ce que** ledit boîtier (100) est surmoulé sur ledit insert (500).

9. Elément robinet/détendeur pour bouteille de gaz sous pression, définissant un circuit de gaz comportant, en série, une portion de circuit haute pression, un clapet de détente et une portion de circuit basse pression, **caractérisé en ce qu'**un dispositif indicateur (10) de pression conforme au dispositif indicateur selon l'une quelconque des revendications 1 à 8 débouche dans ladite portion de circuit haute pression.

10. Bouteille de gaz équipée d'un ensemble robinet/détendeur selon la revendication 9.

## Patentansprüche

1. Vorrichtung zur Anzeige (10) einer physikalischen Größe, umfassend ein Gehäuse (100), an das ein Aufnehmer (200) zum Messen der physikalischen Größe angeschlossen ist, und in dem eine Anzeige (300) mit einem Wert angeordnet ist, der für die physikalische Größe repräsentativ ist, die von dem Messwertaufnehmer gemessen wird, **dadurch gekennzeichnet, dass** die Anzeige einen Bildschirm zur Anzeige von alphanumerischen oder graphischen Zeichen umfasst, der von einer elektronischen Karte (310) gesteuert wird, dadurch, dass eine Leitung (330; 340) zur elektrischen Verbindung mit der elektronischen Karte auf dem Bildschirm angeordnet ist, wobei die elektrische Verbindung unterbrochen werden kann, wenn der Anzeigebildschirm ausfällt.

2. Vorrichtung nach Anspruch 1, **dadurch gekennzeichnet, dass** die Leitung (330) zur elektrischen Verbindung eine einzelne leitende Leitung ist, die mit der elektronischen Karte verbunden ist.

3. Vorrichtung nach Anspruch 1, **dadurch gekennzeichnet** die Leitung (340) zur elektrischen Verbindung eine leitende Leitung ist, die aus einer Vielzahl von elementaren Leitungen (341, 342) besteht, die miteinander durch die elektronische Karte verbunden sind.

4. Vorrichtung nach einem der Ansprüche 1 bis 3, **dadurch gekennzeichnet dass** sie, nacheinander in im Wesentlichen parallelen Ebenen angeordnet, mindestens einen transparenten Deckel (120) des Gehäuses (100), die Anzeige (300), die elektronische Karte (310) und den Messwertfühler (200) aufweist.

5. Vorrichtung nach Anspruch 4, **dadurch gekennzeichnet, dass** sie auch ein Versorgungselement (320) für die elektronische Karte umfasst.

6. Vorrichtung nach einem der Ansprüche 1 bis 5, **dadurch gekennzeichnet, dass** ein Erhaltungs- und Schutzelement, wie etwa ein Harz (130), ein inneres Volumen des Gehäuses (100) ausfüllt.

7. Vorrichtung nach einem der Ansprüche 1 bis 6, **dadurch gekennzeichnet, dass** das Gehäuse (100) ein Anschlussinsert (500) umfasst, an dem der Messwertaufnehmer (200), zum Beispiel durch Schweißen, befestigt ist.

8. Vorrichtung nach Anspruch 7, **dadurch gekennzeichnet, dass** das Gehäuse (100) über dem Insert (500) angeformt ist.

9. Ventil/Druckreduzier-Element für eine unter Druck stehende Gasflasche, das einen Gaskreislauf definiert, umfassend, in Reihe, einen Hochdruckkreislaufabschnitt, ein Entlastungsventil und einen Niederdruckkreislaufabschnitt, **dadurch gekennzeichnet, dass** eine Vorrichtung (10) zur Druckanzeige gemäß der Anzeigevorrichtung nach einem der Ansprüche 1 bis 8 in dem Hochdruckkreislaufabschnitt mündet.

10. Gasflasche, die mit einer Ventil/Druckreduzier-Gruppe nach Anspruch 9 versehen ist.

## Claims

1. Device (10) for indicating a physical quantity, comprising a housing (100) to which is connected a sensor (200) for measuring said physical quantity and in which is provided a display (300) for displaying a value representing the physical quantity measured by said measuring sensor, **characterised in that**, with said display comprising a display screen for alphanumeric or graphic characters controlled by an electronic card (310), an electric line (330; 340) for connection to said electronic card is disposed on said screen, said electrical connection being adapted to be interrupted in the event of breakage of the display screen.

2. Device according to claim 1, **characterised in that** said electric connecting line (330) is a single conductor line connected to said electronic card.

3. Device according to claim 1, **characterised in that** said electric connecting line (340) is a conductor line made up of a plurality of elementary lines (341, 342) connected to one another by said electronic card.

4. Device according to any one of claims 1 to 3, **characterised in that** it comprises, located successively in substantially parallel planes, at least, a transparent cover (120) of said housing (100), said display (300), said electronic card (310) and said measuring sensor (200).

5. Device according to claim 4, **characterised in that** it also comprises a supply element (320) for said electronic card.

6. Device according to any one of claims 1 to 5, **characterised in that** a holding and protecting element such as a resin (130) fills an inner volume of said housing (100).

7. Device according to any one of claims 1 to 6, **characterised in that** said housing (100) comprises a connecting insert (500) to which said measuring sensor (200) is attached, for example by welding.

8. Device according to claim 7, **characterised in that** said housing (100) is overmoulded onto said insert (500).

9. Stopcock/expansion element for pressurised gas bottle, defining a gas circuit comprising, in series, a high pressure circuit portion, an expansion valve and a low pressure circuit portion, **characterised in that** a pressure indicator device (10) in conformity with the indicating device according to any one of claims 1 to 8 opens into said high pressure circuit portion.

10. Gas bottle equipped with a stopcock/expansion element assembly according to claim 9.
